# EUROPEAN PATENT SPECIFICATION

(11) **EP 3 052 232 B1**
(45) Date of publication and mention of the grant of the patent: **10.01.2018**
(21) Application number: 14790428.8
(22) Date of filing: 03.10.2014
(51) Int. Cl.: B01J 38/00, B01J 29/90, C10G 11/18

(54) **PROCESS FOR REACTIVATING AN IRON-CONTAMINATED FCC CATALYST**
VERFAHREN ZUM REAKTIVIEREN EINES EISENKONTAMINIERTEN FCC-KATALYSATORS
PROCÉDÉ DE RÉACTIVATION D'UN CATALYSEUR DE CRAQUAGE CATALYTIQUE FLUIDE CONTAMINÉ PAR DU FER

(30) Priority: 04.10.2013 US 201361887075 P
(43) Date of publication of application: 10.08.2016
(73) Proprietor: Johnson Matthey Process Technologies, Inc., Manasquan, NJ 08736 (US)
(72) Inventor: DIDDAMS, Paul, 160 00 Prague (CZ); ALLAHVERDI, Mehdi, Pooler, GA 31322 (US); DE GRAAF, Elbert, Arjan, Manasquan, NJ 08736 (US)
(74) Representative: Ridland, John
(86) International application number: PCT/US2014/059085
(87) International publication number: WO 2015/051266

(56) References cited:
- WO-A2-2006/029129
- WO-A2-2008/003091

## Description

### FIELD OF THE INVENTION

The invention relates to a process for reactivating an iron-contaminated FCC catalyst.

### BACKGROUND OF THE INVENTION

Catalytic cracking, in particular fluid catalytic cracking ("FCC"), processes are petroleum refining processes that produce the majority of the refinery gasoline blending pool. In the FCC process, heavy hydrocarbon fractions are cracked to produce lighter, valuable products (gasoline, distillate, and C₂-C₄ olefins and saturated hydrocarbons). The cracking process takes place in the riser/reactor section of a FCC unit, where the hydrocarbon fractions are contacted with a FCC catalyst and other additive particles at elevated temperature. As the endothermic cracking reactions occur, heavy carbon (known as coke) is deposited onto the catalyst and additive particles. These particles are carried from the FCC unit's reactor to the catalyst regenerator, and the coke is burned off in the presence of air to regenerate the catalyst and additive particles. The coke combustion exhaust gas stream rises to the top of the regenerator through the regenerator flue. The exhaust gas generally contains nitrogen oxides (NOₓ), sulfur oxides (SOₓ), carbon monoxide, carbon dioxide, ammonia, nitrogen, and oxygen.

The presence of metal contaminants in the hydrocarbon feedstock process can present a serious problem for the FCC process. Common metal contaminants include iron, nickel, sodium, and vanadium. Some of these metals can promote dehydrogenation reactions during the cracking sequence, which can result in increased amounts of coke and light gases at the expense of gasoline production, and have a detrimental effect on other cracking products. Metal contaminants can also deposit on the FCC catalyst and affect its stability and crystallinity, as well as potentially deactivating the the FCC catalyst. During the regeneration step, metals present within the catalyst can volatize under the hydrothermal conditions and re-deposit on the catalyst.

Iron contaminants in hydrocarbon feedstock have been shown to poison the cracking catalyst and reduce its activity. The poisoning occurs when iron (and typically with mobile silica as well) clogs the surface of the FCC catalyst resulting in catalyst poisoning and a significant decrease in apparent bulk density of the FCC catalyst.

Because compounds containing iron and other metal contaminants cannot generally be removed from the FCC unit as volatile compounds, the usual approach has been to passivate these metal compounds under the conditions encountered during the cracking process. Passivation can involve incorporating additives into the cracking catalyst or adding separate additive particles into the FCC unit along with the cracking catalyst. These additives can preferentially combine with the metal contaminants and act as "traps" or "sinks" so that the active component of the cracking catalyst is protected. Metal contaminants can then be removed along with the catalyst that is withdrawn from the unit during its normal operation. Fresh metal passivating additives can then be added to the unit, along with makeup catalyst, in order to affect a continuous withdrawal of the detrimental metal contaminants during operation of the FCC unit. Depending on the level of metal contaminants in the feedstock, the quantity of additive can be varied relative to the makeup catalyst in order to achieve the desired degree of metals passivation. However, reactivating a catalyst once it has been poisoned is still problematic.

It is desirable to attain still further improvements in reducing iron poisoning in the FCC process. We have discovered a new method of reactivating an iron-contaminated FCC catalyst.

WO2008003091 A2 discloses compositions and methods suitable for removing poisonous metals from hydrocarbons. The compositions comprise hydrotalcite having one or more trapping metals dispersed on the outer surface thereof.

WO2006029129 A2 discloses catalytic cracking additives comprising a metals trapping material; and a high activity catalyst, and processes for increasing the performance of a bulk catalyst in the presence of at least one metal.

### SUMMARY OF THE INVENTION

The invention provides the use of an iron transfer agent for reactivating an iron-contaminated fluid catalytic cracking (FCC) catalyst. The use comprises contacting the iron-contaminated FCC catalyst with an iron transfer agent. The iron transfer agent comprises a magnesia-alumina hydrotalcite material that contains a modifier selected from the group consisting of calcium, manganese, lanthanum, iron, zinc, or phosphate.

### BRIEF DESCRIPTION OF THE DRAWINGS

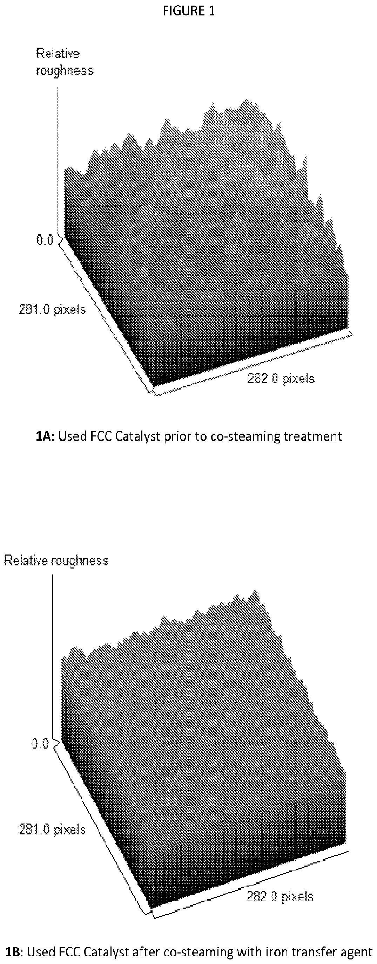

FIG. 1 is a surface roughness comparison using reconstructed SEM images of a used and reactivated FCC catalyst.

### DETAILED DESCRIPTION OF THE INVENTION

The invention includes the use of an iron transfer agent for reactivating an iron-contaminated fluid catalytic cracking (FCC) catalyst by contacting the iron-contaminated FCC catalyst with an iron transfer agent.

In the FCC process, heavy hydrocarbon fractions are cracked to produce lighter, valuable products (gasoline, distillate, and C₂-C₄ olefins and saturated hydrocarbons) in the presence of a FCC catalyst. The cracking process takes place in the riser/reactor section of a FCC unit, where the hydrocarbon fractions are contacted with a FCC catalyst and other additive particles at elevated temperature. As the endothermic cracking reactions occur, heavy carbon (known as coke) is deposited onto the catalyst and additive particles. These particles are carried from the FCC unit's reactor to the catalyst regenerator, and the coke is burned off in the presence of air to regenerate the catalyst and additive particles. The coke combustion exhaust gas stream rises to the top of the regenerator through the regenerator flue. The exhaust gas generally contains nitrogen oxides (NOₓ), sulfur oxides (SOₓ), carbon monoxide, carbon dioxide, ammonia, nitrogen, and oxygen.

Any typical FCC catalyst can be used in the process of the invention. The FCC catalyst preferably comprises a zeolite (containing silica and alumina) in a porous refractory matrix such as silica-alumina, clay, or the like. The zeolite is usually from about 5 to about 40% of the FCC catalyst by weight, with the rest being matrix or diluent. The zeolites that can be used herein include both natural and synthetic zeolites. Conventional zeolites such as Y zeolites, or aluminum deficient forms of these zeolites, such as dealuminized Y, ultrastable Y and ultrahydrophobic Y, can be used. The zeolites can be stabilized with rare earths, for example, in an amount of from about 0.1 to about 10% by weight.

Relatively high silica zeolite containing catalysts are preferred in the FCC process. These zeolites are able withstand the high temperatures usually associated with complete combustion of CO to CO₂ within the FCC regenerator. Preferred high silica zeolites include those containing about 10 to about 40% ultrastable Y or rare earth ultrastable Y.

Preferably, the surface area of the FCC catalyst are greater than about 50 m²/g, more preferably greater than about 100 m²/g, and even more preferably greater than about 200 m²/g.

The presence of iron in the heavy hydrocarbon feed can result in the poisoning of the FCC catalyst. Typically, iron accumulates on the surface of the FCC catalyst to produce an iron-contaminated FCC catalyst. In addition to iron accumulation on the FCC surface, silica from within the FCC catalyst will also typically migrate to the FCC catalyst surface along with the accumulated iron. The typical FCC catalyst contains alumina and silica, and part of the silica will usually be present in a mobile form that is not bound in the framework of zeolite or binder (such as clay). The creation of mobile silica is enhanced by steam and elevated temperature, and certain agents are known in the art to enhance this process, such as sodium, calcium and vanadium. Eventually, the surface of the FCC catalyst is blocked by the iron accumulation (typically a mixture of iron and silica) resulting in little to no catalytic activity.

When an FCC catalyst is poisoned by iron contamination the FCC catalyst will contain more iron than a fresh/unused FCC catalyst. A fresh FCC catalyst may contain a small amount of iron, typically due to iron that is found within clay binder. Typical iron levels for a fresh FCC catalyst are usually between 0.3 and 0.5 weight percent of Fe₂O₃, although lower levels may be found depending on catalyst composition and clay (e.g., kaolin) source. Although iron may be found in the fresh catalyst, it is the amount of iron that accumulates on the FCC catalyst during the FCC process (i.e., the "added iron") that determines the level of iron poisoning. Generally, the onset of iron poisoning will occur once the FCC catalyst has accumulated about 0.3 weight percent or more of added iron (as measured by amount of Fe₂O₃).

As iron accumulates on the catalyst surface, mobile silica will typically begin to cover the iron nodules formed at the catalyst surface, resulting in a dense outer layer on the FCC catalyst. Diffusion into the FCC catalyst becomes limited and the apparent bulk density (ABD) of the FCC catalyst start to decrease as well, leading to an increase in slurry yield, a decrease of gasoline and LCO yield and an increase the dry gas (and coke) yield. In addition, the change in ABD can affect fluidization and circulation of the FCC catalyst and affect unit performance via this mechanism too.

The use of the invention comprises contacting the iron-contaminated FCC catalyst with an iron transfer agent. The iron transfer agent comprises a magnesia-alumina hydrotalcite material that contains a modifier selected from the group consisting of calcium, manganese, lanthanum, iron, zinc, or phosphate.

Magnesia-alumina hydrotalcite materials are well-known in the art. Preferably, the magnesia-alumina hydrotalcite materials include a hydrotalcite, a precursor to a hydrotalcite, a dehydrated or dehydroxylated hydrotalcite, a hydrotalcite-like material, a precursor to a hydrotalcite-like material, a dehydrated or dehydroxylated hydrotalcite-like material, and combinations of two or more thereof.

The magnesia-alumina hydrotalcite material may be a hydrotalcite or hydrotalcite-like material (HTL). The hydrotalcite or HTL may be collapsed, dehydrated and or dehydroxylated. Non-limiting examples and methods for making various types of HTL are described in U.S. Patent No. 6,028,023; U.S Patent No. 6,479,421; U.S. Patent No. 6,929,736; and U.S. Patent No. 7,112,313; which are incorporated by reference herein in their entirety. Other non-limiting examples and methods for making various types of HTL are described in U.S. Patent No. 4,866,019; U.S. Patent No. 4,964,581; and U.S. Patent No. 4,952,382; which are incorporated by reference herein in their entirety. Other methods for making hydrotalcite-like compounds are described, for example, by Cavani et al., Catalysis Today, 11:173-301 (1991), which is incorporated by reference herein in its entirety.

The magnesia-alumina hydrotalcite material preferably comprises at least one hydrotalcite-like compound of formula (I):

(Mg²⁺ₘAl³⁺ₙ(OH)₂ₘ₊₂ₙ)A_{n/a}^{a-}•bH₂O (I)

where A is CO₃, NO₃, SO₄, Cl, OH, Cr, I, SiO₃, HPO₃, MnO₄, HGaO₃, HVO₄, ClO₄, BO₃, or a mixture of two or more thereof; a is 1, 2, or 3; b is between 0 and 10; and m and n are selected so that the ratio of m/n is about 1 to about 10. Preferred hydrotalcite-like compound of formula (I) include Mg₆Al₂(OH)₁₆CO₃•4H₂O and or Mg₆Al₂(OH)₁₈•4.5H₂O

The iron transfer agent used in the invention contains one or more modifiers. The one or more modifiers comprise calcium, manganese, lanthanum, iron, zinc, or phosphate. Calcium and iron are more preferred. Thus, the iron transfer agent may preferably be a calcium-containing magnesia-alumina hydrotalcite material, or it may preferably be an iron-containing magnesia-alumina hydrotalcite material.

The modifiers are typically added to the magnesia-alumina hydrotalcite material in the form of modifier metal compounds. For example, when calcium is used as the modifier, the calcium is preferably added to the magnesia-alumina hydrotalcite material as calcium oxide, calcium hydroxide, calcium carbonate, calcium nitrate, calcium sulfate, calcium alkoxides (e.g., isopropoxides), and mixtures thereof.

The modifier metal compounds may be added to the magnesia-alumina hydrotalcite material by any known means, the manner of addition is not considered to be particularly critical. For example, a modifier metal compound (such as calcium hydroxide) may be added to the magnesia-alumina hydrotalcite material by impregnation, adsorption, ion-exchange, incipient wetness, precipitation, or the like.

Preferably, the iron transfer agent may be formed into microspheres for use in the reactivation process. The microspheres may optionally comprise a binder or a binder source. The binder or binder source may be any suitable binder useful for agglomerating the iron transfer agent particles, and imparting improved mechanical properties to the agglomerated iron transfer agent. Preferred binders include the oxides of silicon, aluminum, boron, phosphorus, titanium, zirconium and/or magnesium. Especially preferred binders are silica, alumina, titania, calcium phosphate, calcium silicate, clay minerals, and mixtures thereof. Examples of clay minerals include montmorillonites; kaolins, bentonites and sepiolites. Preferred binder sources include silica sources, alumina sources, and the like. Silica sources include, but are not limited to, colloidal silica, fumed silica, silicic acid, silicon alkoxides, alkali and alkaline earth metal silicates. Preferred silicon alkoxides include tetraethylorthosilicate, tetramethylorthosilicate, and the like. Tetraethylorthosilicate is especially preferred. Silica sources also include oligomeric silica formed by the hydrolysis of a silicon alkoxides, such as tetraethylorthosilicate, in the presence of a tetraalkylammonium hydroxide. Preferred alkali and alkaline earth metal silicates include calcium silicate, sodium silicate, potassium silicate, and magnesium silicate. Suitable alumina sources include aluminum trialkoxides such as aluminum triisopropoxide, alumina gel, and aluminum chlorohydrates. Suitable binder sources also include titania sources (such as titanates and titania sol), clay mineral sources (such as kaolin), and calcium phosphate.

The microspheres preferably have a particle size ranging from 5 to 200 microns, more preferably from 60 to 120 microns in diameter.

The microspheres can be produced by any convenient method. Preferably, a slurry of the iron transfer agent is prepared by dispersing the iron transfer agent and an optional binder or binder source in a solvent. The solvent is preferably water. The slurry preferably contains between 0.1 to 50 weight percent solids content, more preferably between 1 to 30 weight percent, and most preferably between 5 to 20 weight percent solids content. The slurry is prepared by dispersing the iron transfer agent (and optional binder) in water. If necessary, the solids in the slurry may be ground to a particle size which is appropriate for shaping the particles, for example 1-2 microns, or the slurry may be preferentially passed through an appropriate screen, e.g. 100 mesh, to ensure that unduly large particles do not pass to the microsphere forming step.

After the slurry is prepared, the mixture is subjected to a forming step to produce the microspheres comprising the iron transfer agent. The forming step can be accomplished by any known method, including prilling, drying in air on trays (followed by fragmentation and sieving), belt roaster drying, extrusion, vacuum drying on a belt, and spray-drying. Preferably, the forming step is performed by means of spray-drying. By submitting the slurry to spray drying, some of the solvent (e.g., water) is eliminated and simultaneously the sorbent (and binder if used) is activated, leading to the formation of microspheres with a three-dimensional network. Preferably, a 5-200 micron dry product is produced, more preferably a 60-120 micron dry product is produced.

In addition to forming microspheres of the iron transfer agent itself, it is also possible to form microspheres of the magnesia-alumina hydrotalcite material alone and then contact these microspheres with one or more modifiers to produce the iron transfer agent. This contacting step can be performed by any convenient method in order to contact the one or more modifiers with the magnesia-alumina hydrotalcite material microspheres. Preferably, the one or more modifiers may be added to the magnesia-alumina hydrotalcite material microspheres by impregnation, adsorption, ion-exchange, precipitation, hydration-load or the like. Preferably, the one or more modifiers are added to the magnesia-alumina hydrotalcite material microspheres in the form of a solution of the modifier metal compound(s), comprising the one or more modifier metal compounds in a solvent. Typical solvents are those that are capable of solubilizing the modifier metal compound(s). Preferred solvents include water and alcohol. Preferred alcohol solvents include C₁-C₁₂ aliphatic alcohols and C₆-C₁₂ aromatic alcohols; C₁-C₄ aliphatic alcohols are more preferred. Particularly preferred alcohol solvents include methanol, ethanol, isopropanol, t-butanol, and mixtures thereof.

Following the forming step, the microspheres of iron transfer agent are preferably calcined (heating at greater than 250°C). The calcination is typically performed by heating the microspheres at elevated temperatures in the presence of oxygen (for example, in air or a nitrogen/oxygen mixture). The preferred calcination temperature is greater than 400°C, more preferably between 500°C to 800°C. Typically, calcination times of from about 0.1 to 24 hours will be sufficient.

The invention comprises contacting the iron-contaminated FCC catalyst with the iron transfer agent. The contacting is preferably performed at elevated temperature and preferably in the presence of steam. Preferably, the contacting step is performed at a temperature greater than 300°C, more preferably from 300°C to 1500°C, and even more preferably from 450 to 800°C. The reactivation can be performed in a vessel that is separate from the FCC unit, or it can be performed within the FCC unit itself.

Preferably, the reactivating of the iron-contaminated FCC catalyst is performed within the FCC unit itself. The use comprises contacting an iron-contaminated FCC catalyst with the iron transfer agent within the reactor and regenerator sections of the FCC unit. The use for reactivating an iron-contaminated FCC catalyst also includes the prevention of iron poisoning as well as the iron transfer agent can also remove iron from the hydrocarbon feed itself and thus slow the onset of iron poisoning.

Preferably, the iron transfer agent is introduced into the FCC regenerator and is continuously cycled between the FCC reactor and the regenerator. Preferably, the iron transfer agent can be used in an amount of about 0.1 weight percent to about 35 weight percent of the circulating inventory of the total catalyst and solid additives (FCC catalyst + iron transfer agent + other solid additives) in the FCC regenerator, more preferably from 1 weight percent to 25 weight percent.

The following examples merely illustrate the invention.

### EXAMPLE 1: PREPARATION OF IRON TRANSFER AGENT

A hydrotalcite-like compound with a 4:1 Mg:Al ratio, prepared according to the procedure of U.S. Pat. No. 6,028,023, is mixed with calcium hydroxide (20 wt.% based on oxides in final product), then the mixed slurry is spray dried to form microsphere particles and calcined at about 600°C to produce Iron Transfer Agent 1, containing 20 wt.% Ca, 52 wt.% Mg, and 28 wt.% Al.

### EXAMPLE 2: LAB REACTIVATION OF IRON-CONTAMINATED FCC CATALYST

An equilibrium catalyst suffering from iron poisoning (containing 2 wt.% Fe₂O₃) is co-steamed with 20 wt.% diluent (kaolin spray dried with an inert silica binder) in a fluid bed at 95% steam, 788°C for 20 hours. The same steaming procedure is carried out for the iron transfer agent as described in example 1 (20% Agent 1, 80% iron poisoned Ecat). The results show that co-steaming with an inert diluent shows no change to the surface of the used catalyst particles whereas co-steaming with the iron transfer agent shows decreased surface iron. See Figure 1.

## Claims

1. The use of an iron transfer agent for reactivating an iron-contaminated fluid catalytic cracking (FCC) catalyst, comprising contacting the iron-contaminated FCC catalyst with an iron transfer agent comprising a magnesia-alumina hydrotalcite material that contains a modifier selected from the group consisting of calcium, manganese, lanthanum, iron, zinc, or phosphate.

2. The use of claim 1, wherein the magnesia-alumina hydrotalcite material comprises at least one member selected from a group consisting of a precursor to a hydrotalcite, a hydrotalcite, a dehydrated or dehydroxylated hydrotalcite, a precursor to a hydrotalcite-like material, a hydrotalcite-like material, a dehydrated or dehydroxylated hydrotalcite-like material, and combinations of two or more thereof.

3. The use of claim 1, wherein the modifier is calcium.

4. The use of claim 1, wherein the modifier is iron.

5. The use of claim 1, wherein the iron transfer agent comprises from 1 to 50 weight percent of the modifier.

6. The use of claim 1, wherein the contacting of the iron-contaminated FCC catalyst with an iron transfer agent is performed at a temperature of from 450 to 800°C.

7. The use of claim 1, wherein the contacting of the iron-contaminated FCC catalyst with an iron transfer agent is performed in the presence of steam.

8. The use of claim 1, wherein contacting of the iron-contaminated FCC catalyst with the iron transfer agent occurs within a FCC unit comprising a reactor section and a regenerator section.

9. The use of claim 8, wherein the iron transfer agent is introduced into the FCC unit and is continuously cycled between the reactor section and the regenerator section.

10. The use of claim 9, wherein the iron transfer agent is used in an amount of 0.1 weight percent to 35 weight percent of the circulating inventory of the total catalyst and solid additives in the FCC regenerator.

11. The use of claim 10, wherein the iron transfer agent is used in an amount of 1 weight percent to 25 weight percent of the circulating inventory of the total catalyst and solid additives in the FCC regenerator.

## Patentansprüche

1. Verwendung eines Eisenübertragungsmittels zur Reaktivierung eines mit Eisen verunreinigten (FCC-)Katalysators zum katalytischen Kracken eines Fluids, umfassend das Inkontaktbringen des mit Eisen verunreinigten FCC-Katalysators mit einem Eisenübertragungsmittel, umfassend ein Magnesiumoxid-Aluminiumoxid-Hydrotalkit-Material, das einen Modifizierer enthält, ausgewählt aus der Gruppe bestehend aus Calcium, Mangan, Lanthan, Eisen, Zink, oder Phosphat.

2. Verwendung nach Anspruch 1, wobei das Magnesiumoxid-Aluminiumoxid-Hydrotalkit-Material mindestens ein Element enthält, ausgewählt aus einer Gruppe bestehend aus einem Vorläufer zu einem Hydrotalkit, einem Hydrotalkit, einem dehydratisierten oder dehydroxylierten Hydrotalkit, einem Vorläufer zu einem hydrotalkit-ähnlichen Material, einem hydrotalkit-ähnlichen Material, einem dehydratisierten oder dehydroxylierten hydrotalkit-ähnlichen Material und Kombinationen von zwei oder mehr davon.

3. Verwendung nach Anspruch 1, wobei der Modifizierer Calcium ist.

4. Verwendung nach Anspruch 1, wobei der Modifizierer Eisen ist.

5. Verwendung nach Anspruch 1, wobei das Eisenübertragungsmittel 1 bis 50 Gewichtsprozent des Modifizierers enthält.

6. Verwendung nach Anspruch 1, wobei das Inkontaktbringen des mit Eisen verunreinigten FCC-Katalysators mit einem Eisenübertragungsmittel bei einer Temperatur von 450 bis 800°C erfolgt.

7. Verwendung nach Anspruch 1, wobei das Inkontaktbringen des mit Eisen verunreinigten FCC-Katalysators mit einem Eisenübertragungsmittel in Gegenwart von Dampf erfolgt.

8. Verwendung nach Anspruch 1, wobei das Inkontaktbringen des mit Eisen verunreinigten FCC-Katalysators mit dem Eisenübertragungsmittel in einer FCC-Einheit mit einem Reaktorabschnitt und einem Regeneratorabschnitt erfolgt.

9. Verwendung nach Anspruch 8, wobei das Eisenübertragungsmittel in die FCC-Einheit eingebracht wird und in kontinuierlichen Zyklen zwischen dem Reaktorabschnitt und dem Regeneratorabschnitt wechselt.

10. Verwendung nach Anspruch 9, wobei das Eisenübertragungsmittel in einer Menge von 0,1 Gewichtsprozent bis 35 Gewichtsprozent des zirkulierenden Bestandes des Gesamtkatalysators und der festen Additive im FCC-Regenerator verwendet wird.

11. Verwendung nach Anspruch 10, wobei das Eisenübertragungsmittel in einer Menge von 1 Gewichtsprozent bis 25 Gewichtsprozent des zirkulierenden Bestandes des Gesamtkatalysators und der festen Additive im FCC-Regenerator verwendet wird.

## Revendications

1. Utilisation d'un agent de transfert de fer pour réactiver un catalyseur de craquage catalytique de fluide (FCC) contaminé par du fer, comprenant la mise en contact du catalyseur FCC contaminé par du fer avec un agent de transfert de fer comprenant un matériau hydrotalcite magnésie-alumine qui contient un modificateur choisi dans le groupe constitué par le calcium, le manganèse, le lanthane, le fer, le zinc ou le phosphate.

2. Utilisation selon la revendication 1, dans laquelle le matériau hydrotalcite magnésie-alumine comprend au moins un élément choisi dans un groupe constitué par un précurseur d'une hydrotalcite, une hydrotalcite, une hydrotalcite déshydratée ou déshydroxylée, un précurseur de matériau de type hydrotalcite, un matériau de type hydrotalcite, un matériau de type hydrotalcite déshydraté ou déshydroxylé et les combinaisons de deux ou plus de ceux-ci.

3. Utilisation selon la revendication 1, dans laquelle le modificateur est le calcium.

4. Utilisation selon la revendication 1, dans laquelle le modificateur est le fer.

5. Utilisation selon la revendication 1, dans laquelle l'agent de transfert de fer comprend de 1 à 50 pour cent en poids du modificateur.

6. Utilisation selon la revendication 1, dans laquelle la mise en contact du catalyseur FCC contaminé par du fer avec un agent de transfert de fer est réalisée à une température de 450 à 800 °C.

7. Utilisation selon la revendication 1, dans laquelle la mise en contact du catalyseur FCC contaminé par du fer avec un agent de transfert de fer est réalisée en présence de vapeur.

8. Utilisation selon la revendication 1, dans laquelle la mise en contact du catalyseur FCC contaminé par du fer avec l'agent de transfert de fer se produit dans une unité de FCC comprenant une section de réacteur et une section de régénérateur.

9. Utilisation selon la revendication 8, dans laquelle l'agent de transfert de fer est introduit dans l'unité de FCC et est cyclé en continu entre la section de réacteur et la section de régénérateur.

10. Utilisation selon la revendication 9, dans laquelle l'agent de transfert de fer est utilisé en une quantité de 0,1 pour cent en poids à 35 pour cent en poids du stock en circulation du catalyseur total et des additifs solides dans le régénérateur de FCC.

11. Utilisation selon la revendication 10, dans laquelle l'agent de transfert de fer est utilisé en une quantité de 1 pour cent en poids à 25 pour cent en poids du stock en circulation du catalyseur total et des additifs solides dans le régénérateur de FCC.
